# EUROPEAN PATENT APPLICATION

(11) **EP 4 625 216 A1**
(43) Date of publication of application: **01.10.2025**
(21) Application number: 25165440.6
(22) Date of filing: 21.03.2025
(51) Int. Cl.: G06F 21/31, G06F 21/60, G06F 21/62, H04L 9/40

(54) **DISTRIBUTED EDGE-BASED IDENTITY MANAGEMENT**

(30) Priority: 29.03.2024 US 202418622418
(71) Applicant: NCR Voyix Corporation, Atlanta, GA 30308 (US)
(72) Inventor: LEVY, Ely Alain, Tel Aviv (IL)
(74) Representative: Secerna LLP

(57) **Abstract**

An edge-based identity provider provides localized edge network authentication to users and transaction services for offline transactions to be performed via edge devices of a site. The edge device are organized into one or more clusters and include replicated transaction services, transaction states, and transaction data. At least one edge device of the cluster includes the edge-based identity provider, which authenticates the users and the transaction services when external connections to the cluster are down. The transaction services are distributed on the edge device and cooperate to perform offline transactions at the site while the external connections are down based on verified authentications performed by the edge-based identity provider using aliased or local edge network identifiers and credentials preregistered to the users. In an embodiment, after at least one cloud-based login, the users authenticate via the edge-based identity provider for subsequent logins using their aliased identifiers and credentials.

## Description

### Background

Businesses have become extremely dependent on network connectivity, so much so, that businesses are unable to perform operations when connectivity is down. Most business operations reside in remote cloud environments, remote backend organization servers, and/or local store servers. When connectivity is lost, the business is unable to authenticate its own employees for customer transactions, unable to authenticate its operations for a transaction, and/or unable to make sales to its customers.

### Summary

According to a first aspect of the present invention there is provided a method, comprising:
receiving, by an edge device of an edge cluster, a local edge network authentication request from a principal;
verifying a local credential associated with the authentication request; and
providing an authentication token to a service or a workload associated with the edge cluster based at least in part on verifying the local credential.

Aptly, the method further comprises:
wherein receiving further includes receiving the local edge network authentication request when the edge cluster lacks any external network connectivity.

Aptly, the method further comprises:
wherein receiving further includes receiving a principal identifier and the local credential with the local edge network authentication request when the principal is a user attempting to initiate a transaction on the edge cluster of the edge network.

Aptly, the method further comprises:
wherein receiving further includes receiving the principal identifier as encoded information scanned from a barcode or quick response code at a different edge device of the edge cluster.

Aptly, the method further comprises:
wherein receiving further includes receiving the local credential as a personal identification number entered at the different edge device by the principal.

Aptly, the method further comprises:
wherein receiving further includes receiving the local edge network authentication request from a different service or a different workload identified as the principal, wherein the local edge network authentication request identifies a user associated with an in progress transaction being processed on the edge cluster of the edge network.

Aptly, the method further comprises:
wherein verifying further includes hashing the local credential to a hash value and attempting to match the hash value with a principal identifier.

Aptly, the method further comprises:
wherein providing further includes assigning access rights to the authentication token when the local credential is verified.

Aptly, the method further comprises:
processing a transaction on the edge cluster of the edge network when the edge cluster lacks any external network connectivity.

Aptly, the method further comprises:
synchronizing a transaction state and transaction data with a server or a cloud when the edge cluster of the edge network regains external network connectivity.

Aptly, the method further comprises:
receiving principal identifiers and corresponding credentials or corresponding hash values for the corresponding credentials from a server or a cloud when the edge cluster has external network connectivity.

According to a second aspect of the present invention there is provided a method, comprising:
configuring an edge cluster at a site to provide local edge network authentication and process a transaction when the edge cluster lacks any external network connectivity;
authenticating, by the edge cluster, a principal for the transaction when the edge cluster lacks any external network connectivity;
processing, by the edge cluster, the transaction when the principal is authenticated and when the edge cluster lacks any external network connectivity; and
synchronizing, by the edge cluster, a transaction state and transaction data associated with the transaction when the edge cluster regains external network connectivity.

Aptly, the method further comprises:
wherein configuring further includes receiving, by the edge cluster, a principal identifier and a credential or a hash value associated with the credential from an external server before the edge cluster lacks any external network connectivity.

Aptly, the method further comprises:
wherein authenticating further includes processing the authenticating by an identity provider executed on a first edge device of the edge cluster.

Aptly, the method further comprises:
wherein processing the authenticating further includes assigning, by the identity provider, access rights to the principal when the principal is authenticated.

Aptly, the method further comprises:
wherein processing the transaction further includes processing the transaction, by a transaction service executed on a second edge device of the edge cluster.

Aptly, the method further comprises:
wherein processing further includes processing the transaction by a plurality of transactions services executed on a plurality of edge devices that comprise the edge cluster.

Aptly, the method further comprises:
wherein processing further include cooperating by the edge devices to process the transaction services for the transaction via hypertext transfer protocol (HTTP) messages within the edge cluster.

According to a third aspect of the present invention there is provided a system, comprising:
an edge cluster comprising a plurality of edge devices, wherein the edge device configured to cooperate and authenticate a principal for a transaction and process the transaction when the edge cluster lacks any external network connectivity;
an identity provider of a first edge device configured to authenticate the principal when the edge cluster lacks any external network connectivity, assign access rights to the principal, and provide an authentication token to a transaction service; and
the transaction service of at least a second edge device configured to rely on the authentication token provided by the identity provider and use the access rights to process the transaction when the edge cluster lacks any external network connectivity.

Aptly, the system further comprises:
wherein the edge devices comprise one or more of transaction terminals and touchpoint devices capable of initiating and performing transactions.

### Brief Description of the Drawings

Embodiments of the present invention will now be described hereinafter, by way of example only, with reference to the accompanying drawings in which:
FIG. 1 is a diagram of a system for distributed edge-based identity management, according to an example embodiment.
FIG. 2 depicts diagram of an entity relationship diagram for the system of FIG. 1, according to an example embodiment.
FIG. 3 is a flow diagram of a method for distributed edge-based identity management, according to an example embodiment.
FIG. 4 is a flow diagram of another method for distributed edge-based identity management, according to an example embodiment.

### Detailed Description

As stated above, businesses have become increasingly dependent on network connectivity in order to perform business functions. If a business is unable to authenticate its staff and/or operations during a loss of network connectivity, then the business is not able to complete sales transactions for its customers. Because authentication services are unavailable during a network outage, even though terminals of the enterprise may continue to be operational and available to perform transactions, they are in reality not able to complete transactions because of the unavailability of authentication services. Business operations are provided via services from remote backend servers, local store servers, and cloud servers. As noted, a loss in connectivity can result in the business being unable to perform transactions with its customers. This can result in not only lost sales, but also increased customer frustration with the business, and potentially, loss of future business from customers.

The teachings herein provide technical solutions to the aforementioned technical problems by providing edge-based identity management for business staff and for services needed to perform transactions on any given device during network outages. Touchpoint devices, terminals, and other devices located at a business site are configured to operate as a self-contained transaction authentication and transaction processing environment. When network connectivity is lost, the edge devices cooperate to authenticate employees to perform transaction and authentication services required to perform transactions.

In accordance with example embodiments of the technology disclosed herein, each edge device processes one or more services and/or includes an identity provider. The identity provider permits authentication of the staff while network connectivity is lost at a site associated with the edge devices. The edge devices are configured into clusters and communicate with one another using hypertext transfer protocol (HTTP) messages, which each edge device is equipped to receive and send. All services needed for authentication and for performing transactions are duplicated and processed via the clusters of edge devices. When network connectivity is restored, the processed transactions are synchronized with the local site server and/or with a cloud server.

During a network outage, an employee uses a previously registered user identifier and previously registered custom credentials to authenticate to an edge identity provider. The employee has but one true identity but registers for an alias identity associated with that true identity. The aliased identity includes the registered user identifier and registered user credentials and is associated by a cloud identity provider when network connectivity exists to the employee's true identity profile. This allows a local edge identity provider during a network outage to assign access rights to the aliased identity and to trust the employee is associated with the employee's true identity. The edge identity provider issues tokens representing the employee's identity profile and access rights during a network outage and the edge devices and services trust the tokens using cryptographic processing, such as verifying digital signatures of the edge identity provider are signed on and/or associated with the tokens. Services exchange authorization tokens with one another and utilizes security permissions or access rights assigned to the employee to determine whether any given operation can or cannot be authenticated and processed on behalf of the employee. The edge identity provider also issues the tokens to the services during the network outage, which are also trusted based on cryptographic signature verification between the services and the edge identity provider.

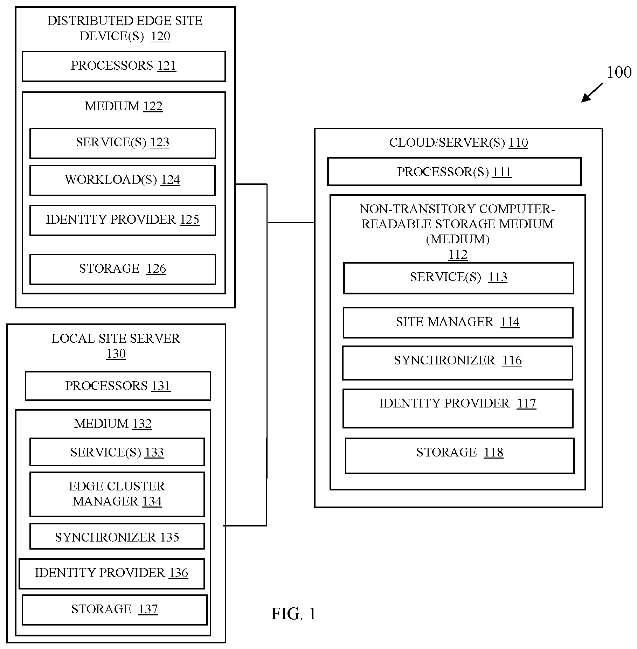

FIG. 1 is a diagram of a system 100 for distributed edge-based identity management, according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of edge-based identity management as presented herein and below.

System 100 includes a cloud 110 or server 110 (hereinafter just "cloud 110"), a plurality of edge devices 120, and a local site server 130. Cloud 110 includes at least one processor 111 and a non-transitory computer-readable storage medium (hereinafter just "medium") 112, which includes instructions for a plurality of services 113, a site manager 114, a synchronizer 116, and an identity provider 117. The instructions when provided to and executed by processor 111 cause processor 111 to perform processing, functions, and/or operations discussed herein and below with respect to 113-117. Medium 112 also include persistent and non-volatile storage 118.

Each edge device 120 includes at least one processor 121 and a medium 122, which includes instructions for one or more services 133, one or more workloads 124, and, optionally, an identity provider 125. At lease one edge device 120 in a given cluster of edge devices 120 includes an identity provider 125. However, not every edge device 120 requires an identity provider 125. The instructions when provided to and executed by processor 121 cause processor 121 to perform the processing, functions, and/or operations discussed herein and below with respect to 123-125. Medium 122 also includes persistent and non-volatile storage 126.

Local site server 130 includes at least one processor 131 and a medium 132, which includes instructions for a plurality of services 133, an edge cluster manager 134, a synchronizer 135, and an identity provider 136. The instructions when provided to and executed by processor 131 from medium 132 cause processor 131 to perform the processing, functions, and/or operations discussed herein and below with respect to 133--135. Medium 132 also includes persistent and non-volatile storage 137.

During operation of system 100, synchronizers 116 and 135 ensure that transaction states and transaction related data such as sales, inventory, loyalty, and authentication related data are synchronized. Site manager 114 provides configuration information needed by services 113 to the local site server 130, which ensures that duplicated or failover services 133 are properly configured to execute via the local site server 130 should a network connection between cloud 110 and local site server 130 be experienced. This ensures that local site server 130 can continue to execute services 133 without interruption during the network outage. Similarly, identity provider 117 ensures identity provider 136 has a full copy of aliased and local user and/or service identifiers and corresponding credentials or corresponding hash values for the credentials associated with each aliased and local identifier such that when a network outage between local site server 130 and cloud 110 is experienced, the identity provider 136 of the local site server 130 is fully capable of providing user and service authentication during the network outage.

Edge cluster manager 134 interacts at least one specialized service 123 of at least one edge device 120 to ensure that transaction states and transaction related data are synchronized within the clusters of the edge devices 120 situated throughout a given site. Edge cluster manager 134 provides configuration information needed by services 123 to at least one edge device service 123 to ensure duplicated or failover services 123 within the clusters are properly configured to execute on corresponding edge devices 120 of the edge clusters should a network connection between cloud 110 and/or local site server 130 be experienced. Similarly, identity provider 136 ensures identity provider 125 has a full copy of local and aliased user and/or service identifiers and corresponding credentials or corresponding hash values for the credentials associated with each identifier such that when a network outage between local site server 130 and/or cloud 110 is experienced, the identity provider 125 of a given edge device 120 within the edge clusters is fully capable of providing user and service authentication during the network outage.

Notably, the edge devices 120 can be directly connected to cloud 110 for one or more needed services 113 of the cloud and/or for identity management from identity provider 117. In such a case, identity provider 117 ensures that identity provider 125 is synchronized with aliased and local identifiers and corresponding credentials or hash values of credentials. This can also be the case for a number of services 113 in which case site manager 114 and synchronizer 116 ensures the transaction states and transaction data needed by such services 113 are configured properly and available on the edge devices 120 of the edge clusters.

In an embodiment, the operations discussed above with respect to the local site server 130 are subsumed into cloud 110. In this embodiment, there is no local site server 130 or a substantially scaled down site server 130. In this embodiment, site manager 114 provides the configuration information to at least one edge device service 123 of the edge clusters.

The transaction states and transaction data are housed in duplicate in storages 118, 137, and 126. Synchronization ensures that when a network outage occurs, the edge clusters can use storage 126 to continue authenticating users and services 123 and continue processing transaction at a site associated with the edge devices 120.

As used herein, a "principal" is an entity that requires authentication, is assigned an identity, and is assigned access rights or security permissions, which define permissible and impermissible operations for a given principal. Thus, use of the term "principal" includes a user, a device, a service, or a workload. A "workload" is all, or a subset of operations associated with a given service.

Initially, principals who are users preregister an aliased and local identifier and a user-set custom credential with identity provider 136 and/or identity provider 117. This is done when a network connection exists between an edge device 120 and local site server 130 and/or cloud 110. At least once a day or two or more times a day, identity provider 117 federates the registered aliased and local identifiers, credentials, and assigned access rights with identity provider 136 and/or identity provider 125. Each principal that is a service 123 is also assigned an authentication token by identity provider 117 and/or identity provider 136, the tokens are federated with identity provider 136 and/or identity provider 125. Thus, after registration, identity providers 136 and 125 are fully and independently operational to locally authenticate principals for logins to an edge cluster via an edge device 120 and to locally authenticate services to perform operations based on assigned access rights of a given principal who is a user attempting to perform a transaction when network connectivity to the edge cluster is down. The services 123 rely upon the authentication tokens and trust one another along with the identity provider 125. Again, the trust can be established through cryptographic verification of digital signatures signed on or associated with the authentication tokens.

In an embodiment, the aliased and local identifiers for principals who are users is encoded in a barcode or a quick response (QR) code. In an embodiment the aliased and local custom credentials for principals who are users is a personal identification number (PIN).

The edge devices 120 of the configured edge clusters cooperate to provide replicated and failover local edge network authentication via identity provider 125 and process transactions via services 123 using preregistered aliased and local edge network employee/user identifiers and credentials. This means when local site server 130 and cloud 110 are unreachable, the edge clusters are capable of locally authenticating principals and performing transactions while completely offline from any network connection other that a local edge connection between edge devices 120.

In an embodiment, a manager of the site is permitted to preregister identifiers and custom credentials for staff to use as backup should a staff member forget their credentials during a network outage. This is a specialized type of principal vouched for and created by a manager who has access rights to create delegated principals.

During an offline transaction, identity provider 125 authenticates a principal who is a user for performing an offline transaction and assigns access rights to the user. The corresponding workloads 124 and services 123 used during the transaction exchange their tokens when interacting with one another on the edge devices 120 of the edge clusters along with an edge network aliased and local identifier of the user. The identity provider 125 is able to locally authorize, based on the user's assigned access rights, operations that the workloads 124 and/or services 123 need to perform for the transaction on the edge network of the edge devices 120.

In an embodiment, the edge device 120 is a transaction terminal or a touchpoint device (e.g., a smart touch display or other device capable of performing a transaction). Edge devices 120 with the edge clusters can communicate and cooperate with one another via HTTP requests, via peer-to-peer capabilities using wireless capabilities, or via a Wi-Fi connection provided by at least one of the edge device of a given edge cluster.

Because a cloud-based identity provider 117 does not have to be contacted over a wide-area network (WAN) during a network outage to authenticate a user for a transaction within a site, resolution or response time associated with authentication is quicker. An edge identity provider 125 is able to independently authenticate the user via a registered aliased and local edge-network identifier and credential; as a result, lag time to initiate a transaction is reduced from what is conventionally the case. Moreover, and in an embodiment, the local authentication via edge identity providers 125 can be processed even when a WAN or local-area network (LAN) connection is up and available for purposes of increasing the response time and throughput associated with authenticating users. In this embodiment, a user may be required to log in at least once per day via the cloud identity provider 117 but thereafter as the user logs in an out during the work day, the user logs in and authenticates via the user's aliased and local identifier and credential using an edge identity provider 125, This substantially reduces lag times associated with user/employee logins throughout the user's workday and increases thereby transaction throughputs.

System 100 provides secure and high availability of transaction authentication and transaction processing when network connections go down. A business, such as a retail store, can continue to authenticate its employees and process transactions when a local site server and/or cloud network connection is down. Conventionally, this has not been possible, and businesses were unable to perform customer transactions during loss of network connectivity. System 100 reduces authentication and transaction dependencies on network connectivity and access to identity providers and services remotely processed from devices of a site.

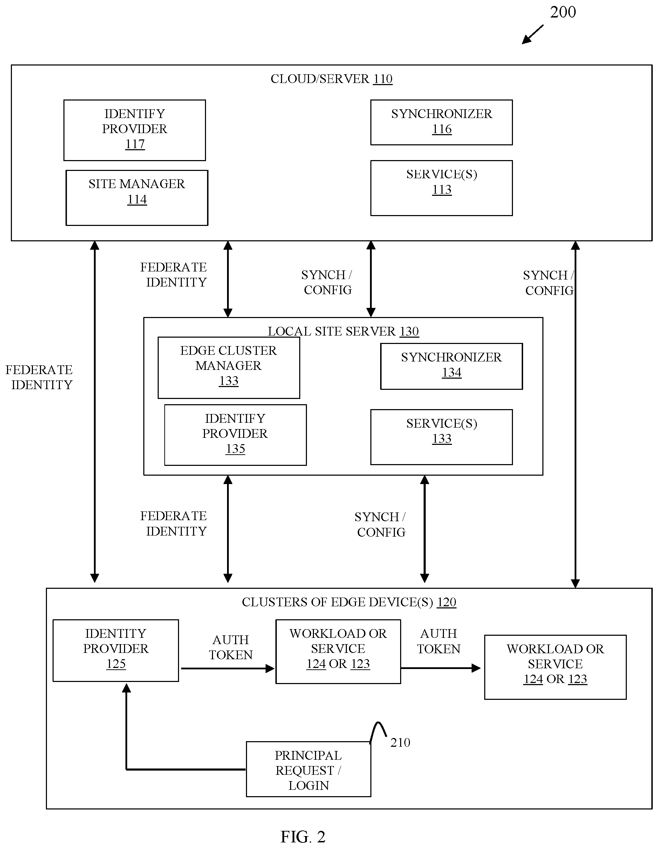

FIG. 2 depicts diagram of an entity relationship diagram 200 for the system of FIG. 1, according to an example embodiment. The example, illustrated in FIG. 2 assumes, at 210, that a principal is requesting to login for a transaction or seeking permission to perform an operation during a transaction. The authentication of the login or request is performed without any network connectivity being available assuming the principal's identifier and custom credentials were previously registered or assuming the principal's identifier is a manager provided delegated identifier and custom credentials which the manager previously registered.

When network connectivity exists, aliased and local edge network principals' identifiers and credentials are federated between identity provider 117 and identity provider 125. In an embodiment, the federation is also between identity provider 117 and identity provider 136 or between identity provider 136 and identity provider 125.

Also, when network connectivity exists, transaction states transaction data for services 113 are synchronized between cloud 110 and local site server 130, between cloud 110 and the clusters of edge devices 120, and/or between local site server 130 and the clusters of edge devices 120. During set up and periodically, service configuration information is provided between cloud 110 and the clusters of edge devices 120, between cloud 110 and local site server 130, and/or between local site server 130 and the clusters of edge devices 120.

At 210, network connectivity between the clusters of edge devices 120 is down such that the edge devices 120 cannot reach cloud 110 and cannot reach local site server 130. A principal makes a request to login or authenticate an operation associated with a start of a transaction on a given edge device 120 or associated with an operation in furtherance of processing an already initiated transaction. Identity provider 125 determines whether authentication can be provided or not based on the login or request from the principal. Assuming authentication is made, identity provider 125 provides an authentication token to the appropriate workload 124 or service 123. The workload 124 or service 123 performs the operation(s) required and passes the authentication token along to a next workload 124 or a next service 123. This continues until the transaction is completed offline when network connectivity outside of the clusters of edge devices 120 was unavailable.

Once the clusters of edge devices 120 are able to detect and obtain network connectivity to either the local site server 130 and/or the cloud 110, a specialized service 123 of the clusters synchronizes the transaction states and transaction data with the local site server 130 and/or the cloud 110.

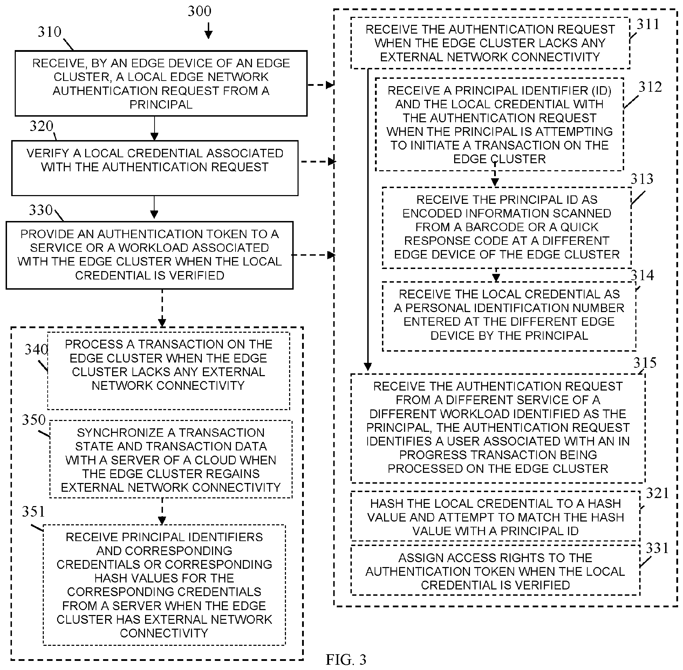

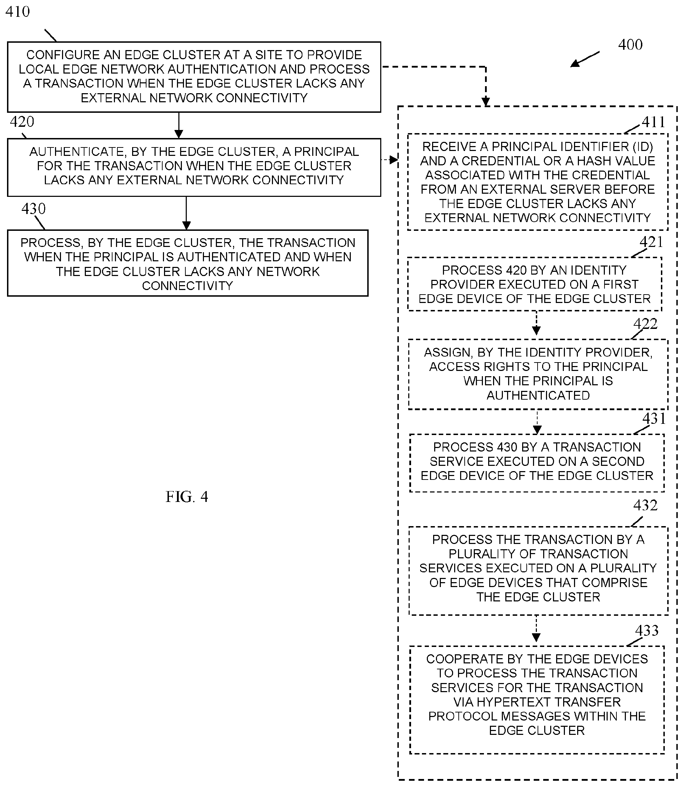

The above-referenced embodiments and other embodiments are now discussed with reference to FIGS. 3 and 4. FIG. 3 is a diagram of a method 300 for edge-based identity management, according to an example embodiment. The software module(s) that implements the method 300 is referred to as an "edge-enabled identity manager." The edge-enabled identity manager is implemented as executable instructions programmed and residing within memory and/or a non-transitory computer-readable (processor-readable) storage medium and executed by one or more processors of one or more devices. The processor(s) of the device(s) that executes the edge-enabled identity manager are specifically configured and programmed to process the edge-enabled identity manager. The edge-enabled identity manager may have access to one or more network connections during its processing. The network connections can be wired, wireless, or a combination of wired and wireless. In an embodiment, the edge-enabled identity manager lacks an external network connection to a local site server 130 and lacks an external network connection to a cloud 110.

In an embodiment, the devices that execute the edge-enabled identity manager are edge devices 120. In an embodiment, the edge devices are transaction terminals or touchpoint device capable of performing transactions. In an embodiment, the edge-enabled identity manager is 123, 124, and/or 125.

At 310, the edge-enabled identity manager receives, via an edge device 120 of an edge cluster, a local edge network authentication request from a principal. In an embodiment, at 311, the edge-enabled identity manager receives the local edge network authentication request when the edge cluster lacks any external network connectivity. That is, the edge device 120 and other edge devices 120 communicate with each other within the edge cluster over an edge network but the edge cluster itself has no external network connectivity or lacks any external network connectivity.

In an embodiment of 311, at 312, the edge-enabled identity manager receives a principal identifier and a local credential with the local edge network authentication request when the principal is attempting to initiate a transaction on the edge cluster of the edge network. This, for example, can be an employe of a store (e.g., the site) logging into a terminal (e.g., edge device 120) to initiate a transaction on behalf of a customer.

In an embodiment of 312, at 313, the edge-enabled identity manager receives the principal identifier as encoded information scanned from a barcode or QR cod at a different edge device 120 of the edge cluster of the edge network. In an embodiment of 313, at 314, the edge-enabled identity manager receives the local credential as a PIN entered at the different edge device 120 by the principal to initiate the transaction and for purposes of logging into the edge cluster and the different edge device 120.

In an embodiment of 311 and at 315, the edge-enabled identity manager receives the local edge network authentication request from a different service 123 or a different workload 124 identified as the principal. The local edge network authentication request identifies a user associated with an in progress transaction being processed on the edge cluster of the edge network.

At 320, the edge-enabled identity manager verifies a local credential associated with the authentication request. In an embodiment, at 321, the edge-enabled identity manager hashes the local credential to a hash value and attempts to match the hash value with a local principal identifier for the principal. The local principal identifier and the local credential are preregistered as aliased local edge network authentication information which is associated with a true identity, a login profile, and/or access rights of the principal.

At 330, the edge-enabled identity manager provides an authentication token to a service 123 or a workload 124 associated with the edge cluster when the local credential is verified at 320. In an embodiment, at 331, the edge-enabled identity manager assigns access rights to the authentication token when the local credential is verified at 320.

In an embodiment, at 340, the edge-enabled identity manager processes a transaction on the edge cluster when the edge cluster lacks any external network connectivity. In an embodiment, at 350, the edge-enabled identity manager synchronizes a transaction state and transaction data with a local site server 130 or a cloud 110 when the edge cluster regains external network connectivity. In an embodiment of 350 and at 351, the edge-enabled identity manager receives principal identifiers and corresponding credentials or corresponding hash values for the corresponding credentials from the local site server 130 or the cloud 110 when the edge cluster has external network connectivity.

FIG. 4 is a diagram of another method 400 for edge-based identity management, according to an example embodiment. The software module(s) that implements the method 400 is referred to as an "edge-enabled transaction authenticator." The edge-enabled transaction authenticator is implemented as executable instructions programmed and residing within memory and/or a non-transitory computer-readable (processor-readable) storage medium and executed by one or more processors of one or more device(s). The processors that execute the edge-enabled transaction authenticator are specifically configured and programmed for processing the edge-enabled transaction authenticator. The edge-enabled transaction authenticator may have access to one or more network connections during its processing. The network connections can be wired, wireless, or a combination of wired and wireless. In an embodiment, the edge-enabled transaction authenticator lacks any external connection to a local site server 130 or to a cloud 110.

In an embodiment, the devices that execute the edge-enabled transaction authenticator are edge devices 120, cloud 110, and/or local site server 130. In an embodiment, the edge-enabled transaction authenticator is 113, 114, 116, 117, 123, 124, 125, 133, 134, 135, 136, and/or method 300. The edge-enabled transaction authenticator presents another and, in some ways, enhanced processing perspective from that which were discussed above for system 100, entity diagram 200, and method 300.

At 410, the edge-enabled transaction authenticator configures an edge cluster at a site to provide authentication and to process a transaction when the edge cluster lacks any external network connectivity. In an embodiment, at 411, the edge-enabled transaction authenticator receives a principal identifier and a credential, or a hash value associated with the credential from an external local site server 130 or an external cloud 110 before the edge cluster lacks any external network connectivity.

At 420, the edge-enabled transaction authenticator, via the edge cluster, authenticates a principal for a transaction when the edge cluster lacks any external network connectivity. In an embodiment, at 421, the edge-enabled transaction authenticator performs 420 via an identity provider 125 that executes on a first edge device 120 of the edge cluster. In an embodiment of 421 and at 422, the identify provider 125 assigns access rights to the principal when the principal is authenticated.

At 430, the edge-enabled transaction authenticator processes, via the edge cluster, the transaction when the principal is authenticated and when the edge cluster lacks any network connectivity. In an embodiment of 422 and 430, at 431, the edge-enabled transaction authenticator performs 430 via a transaction service 123 that executes on a second edge device 120 of the edge cluster.

In an embodiment, at 432, the edge-enabled transaction authenticator performs the transaction by processing a plurality of transaction services 123 executed on a plurality of edge devices 120, which are included within, and which make up the edge cluster. In an embodiment of 432 and at 433, the edge-enabled transaction authenticator performs the transaction by causing the edge devices 420 to cooperate and process the transaction services 123 via HTTP messages sent among the edge devices 120 within the edge cluster.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
receiving, by an edge device of an edge cluster, a local edge network authentication request from a principal;
verifying a local credential associated with the authentication request; and
providing an authentication token to a service or a workload associated with the edge cluster based at least in part on verifying the local credential.

2. The method of claim 1, wherein receiving further includes receiving the local edge network authentication request when the edge cluster lacks any external network connectivity.

3. The method of any preceding claim, wherein receiving further includes receiving a principal identifier and the local credential with the local edge network authentication request when the principal is a user attempting to initiate a transaction on the edge cluster of the edge network.

4. The method of claim 3, wherein receiving further includes receiving the principal identifier as encoded information scanned from a barcode or quick response code at a different edge device of the edge cluster and optionally wherein receiving further includes receiving the local credential as a personal identification number entered at the different edge device by the principal.

5. The method of any preceding claim, wherein receiving further includes receiving the local edge network authentication request from a different service or a different workload identified as the principal, wherein the local edge network authentication request identifies a user associated with an in progress transaction being processed on the edge cluster of the edge network.

6. The method of any preceding claim, wherein verifying further includes hashing the local credential to a hash value and attempting to match the hash value with a principal identifier and/or wherein providing further includes assigning access rights to the authentication token when the local credential is verified.

7. The method of any preceding claim, further comprising:
processing a transaction on the edge cluster of the edge network when the edge cluster lacks any external network connectivity and optionally further comprising,
synchronizing a transaction state and transaction data with a server or a cloud when the edge cluster of the edge network regains external network connectivity.

8. The method of any preceding claim further comprising,
receiving principal identifiers and corresponding credentials or corresponding hash values for the corresponding credentials from a server or a cloud when the edge cluster has external network connectivity.

9. A method, comprising:
configuring an edge cluster at a site to provide local edge network authentication and process a transaction when the edge cluster lacks any external network connectivity;
authenticating, by the edge cluster, a principal for the transaction when the edge cluster lacks any external network connectivity;
processing, by the edge cluster, the transaction when the principal is authenticated and when the edge cluster lacks any external network connectivity; and
synchronizing, by the edge cluster, a transaction state and transaction data associated with the transaction when the edge cluster regains external network connectivity.

10. The method of claim 9, wherein configuring further includes receiving, by the edge cluster, a principal identifier and a credential or a hash value associated with the credential from an external server before the edge cluster lacks any external network connectivity.

11. The method of claim 9 or claim 10, wherein authenticating further includes processing the authenticating by an identity provider executed on a first edge device of the edge cluster.

12. The method of claim 11, wherein processing the authenticating further includes assigning, by the identity provider, access rights to the principal when the principal is authenticated and optionally wherein processing the transaction further includes processing the transaction, by a transaction service executed on a second edge device of the edge cluster.

13. The method of any one of claims 9 to 12, wherein processing further includes processing the transaction by a plurality of transactions services executed on a plurality of edge devices that comprise the edge cluster and/or wherein processing further includes cooperating by the edge devices to process the transaction services for the transaction via hypertext transfer protocol (HTTP) messages within the edge cluster.

14. A system, comprising:
an edge cluster comprising a plurality of edge devices, wherein the edge device configured to cooperate and authenticate a principal for a transaction and process the transaction when the edge cluster lacks any external network connectivity;
an identity provider of a first edge device configured to authenticate the principal when the edge cluster lacks any external network connectivity, assign access rights to the principal, and provide an authentication token to a transaction service; and
the transaction service of at least a second edge device configured to rely on the authentication token provided by the identity provider and use the access rights to process the transaction when the edge cluster lacks any external network connectivity.

15. The system of claim 14, wherein the edge devices comprise one or more of transaction terminals and touchpoint devices capable of initiating and performing transactions.
